# EUROPEAN PATENT APPLICATION

(11) **EP 3 002 156 A2**
(43) Date of publication of application: **06.04.2016**
(21) Application number: 15184588.0
(22) Date of filing: 10.09.2015
(51) Int. Cl.: B60R 3/02

(54) **RETRACTABLE STEP**

(30) Priority: 01.10.2014 IT FI20140055 U
(71) Applicant: Nardini, Davide, 50019 Sesto Fiorentino (Firenze) (IT)
(72) Inventor: Nardini, Davide, 50019 Sesto Fiorentino (Firenze) (IT)
(74) Representative: Mincone, Antimo

(57) **Abstract**

Retractable step comprising a tread which slides bi-directionally along a guide with corresponding sliding means, the tread being driven by motor means comprising an electric motor to which it is connected by means of a mechanical transmission, so as to be disposed in a first retracted configuration in which the tread is in a corresponding housing body and in a second extracted configuration in which the tread protrudes from said housing body, the guide being arranged on two sides of said housing body. Said sliding means comprise a body provided by said guide and having a profile that is complementary coupable with a sliding pad (23) integral with the tread, the contact between said body and the sliding pad (23) occurring on a discontinuous contact surface, said contact surface having a predetermined number of discontinuities through which possible accumulations of dirt formed between the same sliding pad (23) and the body can flow out.

## Description

The present invention relates to a retractable step which can be used in particular, although not exclusively, for campers and similar vehicles.

The campers are often equipped with retractable steps, which are usually arranged at an entry door to facilitate the access on board by means of a structure destined to support the foot. The structure is moved by suitable motorized transmission means, between a rest position, in which the step is retracted remaining inside the contour of the vehicle, and an active position, in which the step is extracted out of the same contour to provide a support to go on board. An example of retractable step of the above mentioned type is disclosed in EP1393977.

There are drawbacks in the use of known retractable steps.

A first drawback is due to the fact that the transmission means generally have a limited protection against water and dirt; such means, which may comprise connecting rods, levers, and /or gear trains, are in fact damaged by the accumulation of dirt and moisture due to the lack of an adequate protection against atmospheric agents and debris of various types that can be received in the area where the step is placed.

Another drawback is related to the positioning of the transmission means, which usually comprise levers, arms or connecting rods articulated with one another and arranged according to configurations that are substantially not advantageous for the purposes of the motion transmission, requiring relatively high power contributions from the motor means, with negative effects both in terms of design and construction, as well as in terms of maintenance and wear.

Another drawback of the known retractable steps is related to the difficulty of unlocking the step when malfunctions occur; for example, in the event of unwanted locking of the step in the extracted position, it can be extremely complex to bring the step in the rest configuration, in which the tread is inside the contour of the vehicle.

Another drawback is related to the complexity required to assembly the various components, both as regards the mechanical-kinematic connection among levers, arms and toothed wheels, both for attaching the components to the frame of the step; up to now, in fact, the components are predominantly installed one by one, by individual placement of pins, shafts, etc. negatively affecting the costs and production times, nad providing drawbacks also during maintenance and/or replacement of spare parts. This structural complexity results also in a relatively high weight of the structure of the step, thereby negatively contributing to the overall mass of the vehicle.

A further drawback which characterizes the known retractable steps is the arrangement of the means for sensing the position of the step, i.e. the means adapted to signal the successful extraction of the same: in fact, these means, important for safety purposes, generally comprise a micro-switch which is placed in an area that may be affected by accumulations of dirt and moisture so that it can be damaged and subject to malfunctioning.

The present invention drastically reduces or eliminates the above mentioned drawbacks by providing a retractable step having the features of claim 1. Other features are the subject of the dependent claims.

One of the advantages of the present invention is given by the presence of a casing that contains the most delicate parts of the transmission by providing a high protection against dirt and moisture; furthermore, the presence of the casing is very useful during the assembly of the structure because all the moving means of the retractable step are mounted in a single operation.

Another advantage is that the present step is also provided with release means which allow easily and quickly to bring the step in the retracted position in case of malfunctions.

Another advantage is provided by the particular conformation of the transmission means, which comprise connecting rods and cranks shaped so as to drastically reduce the force required to move the transmission, and apt to eliminate the dead points in correspondence of which the motor means could be forced.

Another advantage is given by the particular shape of the sliding pads, which have discontinuities to eliminate or at least drastically reduce the possible collection of dirt and/or debris in the sliding area. The advantages provided by the sliding pads) are increased by the presence of low friction support elements.

Advantageously, some elements may be made of plastic material of the so-called self-lubricating type; in this way it is no longer necessary to grease the geared or sliding parts; the absence of grease within the device prevents to dirt and to possible debris to adhere to the grease as instead occurs with greased components.

Another advantage is related to the fact that the abovementioned casing also protects the sensor means, for example a micro-switch, used to detect the position of the step.

Another advantage is that the tread can be formed by two or more parts to allow a modularity of the amplitude (depth) of the tread, i.e. to form differently dimensioned steps.

Another advantage is provided by the fact that some of the connections are made by means of pins with a snap-locking closure in order to simplify and speed up the assembly of the device.

Finally, the substantially exclusive use of light metals or light metal alloys, together with plastic material, advantageously contributes to reduce the weight of the entire device.

These and other advantages and features of this invention will be best understood by anyone skilled in the art from the following description and with the help of the attached drawings given as a practical exemplification of the invention, but not to be considered in a limitative sense, wherein:
- Figs. 1, 2 show, in perspective view, a possible embodiment of the step according to the invention, represented, respectively, in a retracted configuration or rest position and a working or extracted position;
- Fig. 3 is an exploded perspective view of the step shown in the previous figures;
- Fig. 4 relates to an enlarged detail, marked with the letter A in Fig.3, and represented in a perspective view;
- Figs. 5, 6, 7 are perspective views showing the step in different operating positions, which correspond to the step retracted, the step in an intermediate position, and the step extracted; Figs. 5 and 6 comprise a detail in enlarged scale;
- Figs. 8, 9 are two perspective views of a first lever or crank usable in the step of the invention;

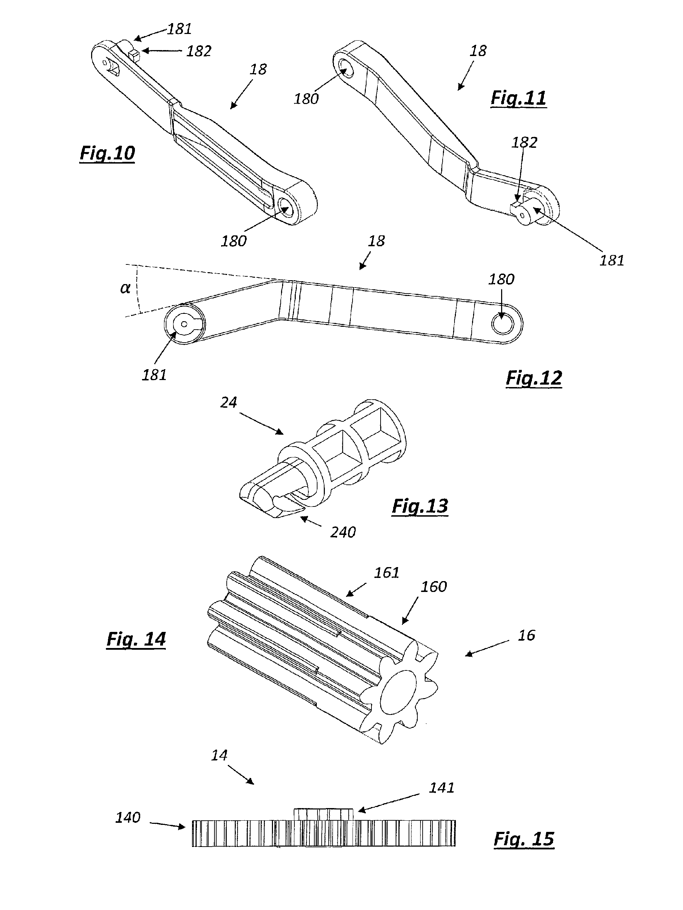

- Figs. 10, 11, 12 are two perspective views and a plan view of a second lever or connecting rod that can be used for making the step of the invention;
- Fig. 13 is a perspective view of a snap lock pin that can be used for making the step of the invention;
- Fig. 14 is a side view of a toothed wheel of the device according to the invention shown in the previous figures;
- Fig.15 is a perspective view of a grooved shaft of the device according to the invention shown in the previous figures;

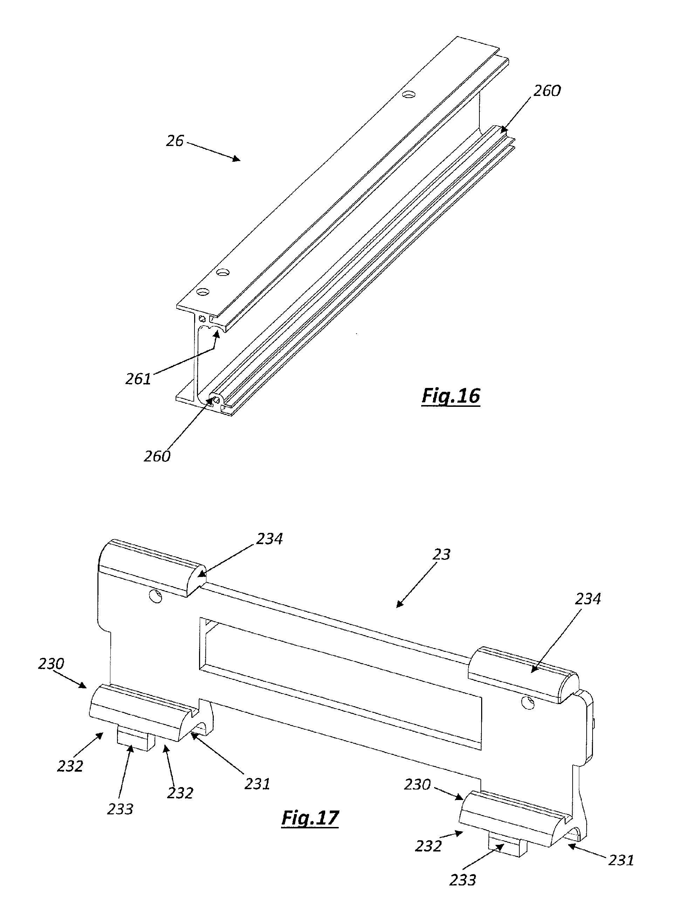

- Figs. 16, 17, 18, 19 are perspective views relating to components usable in the step according to the invention; in particular, Fig. 16 shows an extruded profile defining a guide, Fig. 17 shows a sliding pad, Fig. 18 shows a support element, Fig. 19 shows a flank of the tread, to which it is fixed the sliding pad of Fig. 17 and which is disposed in abutment on the element of Fig. 18;
- Fig. 20 is a schematic plan view, with parts removed, showing the interaction between the guide element of Fig. 16 and the pad of Fig.17;

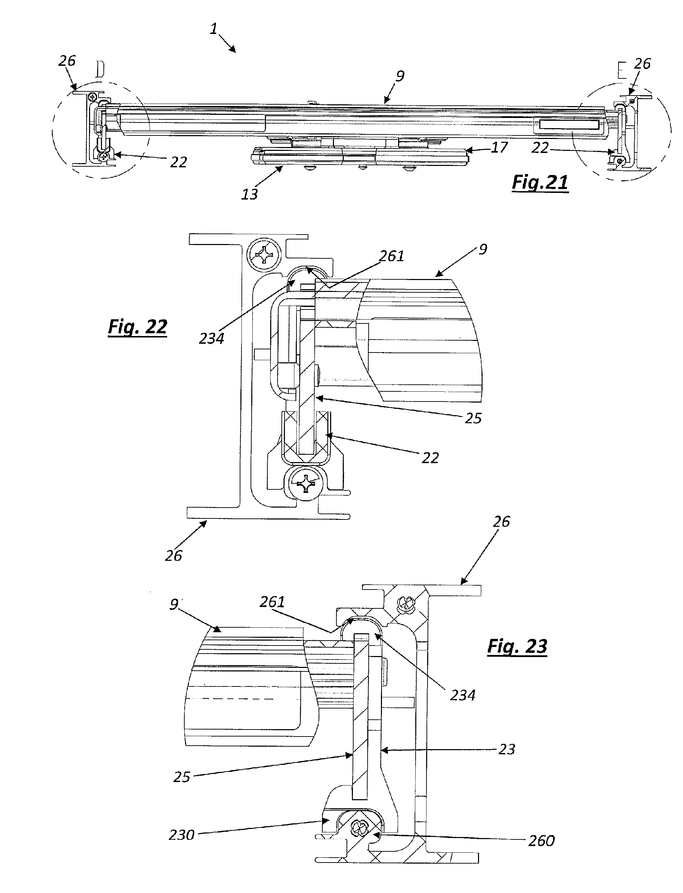

- Fig. 21 is a schematic front view, with parts removed of the present step;
- Figs. 22, 23 are schematic cross-section views with parts removed of the details marked D and E in Fig.21;
- Figs. 24, 25 represent a further example of embodiment of the motor means of the present step.

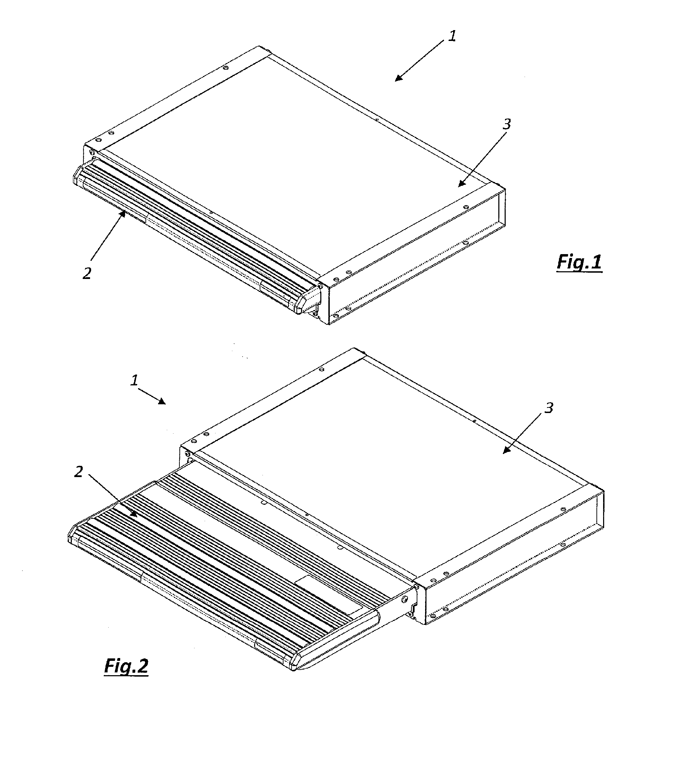

In the drawings, the overall structure which forms the retractable step has been marked with the reference numeral 1; as shown in Figs. 1 and 2, the step includes a tread 2, retractable with respect to a housing body 3that encloses the motor and transmission means. In a manner known per se, and therefore not specifically described, the whole set 1 is stably associated to the vehicle, by fixing the body (3) to the frame of the latter in the chosen position.

The housing body 3 comprises a lower base 28, provided with a rear bottom part 28A, two flanks 26, an upper cover 31, and a front closing wall 29, open and shaped so as to allow the passage of the tread through it. The tread in this example is composed of two parts 9 and 90, to allow a modularity in amplitude (depth) of the tread, or to form steps differently dimensioned; obviously the tread can be formed by a single element. The treads and the parts that form the container body may be made of material mechanically resistant and light like, for example, aluminum, and possibly formed by extrusion.

The tread is closed at the bottom by a bottom cover surface 30. Two side plates 25 are associated to the tread 9, by means of screws 10. The reference numeral 10 will be used even for screws arranged in other positions.

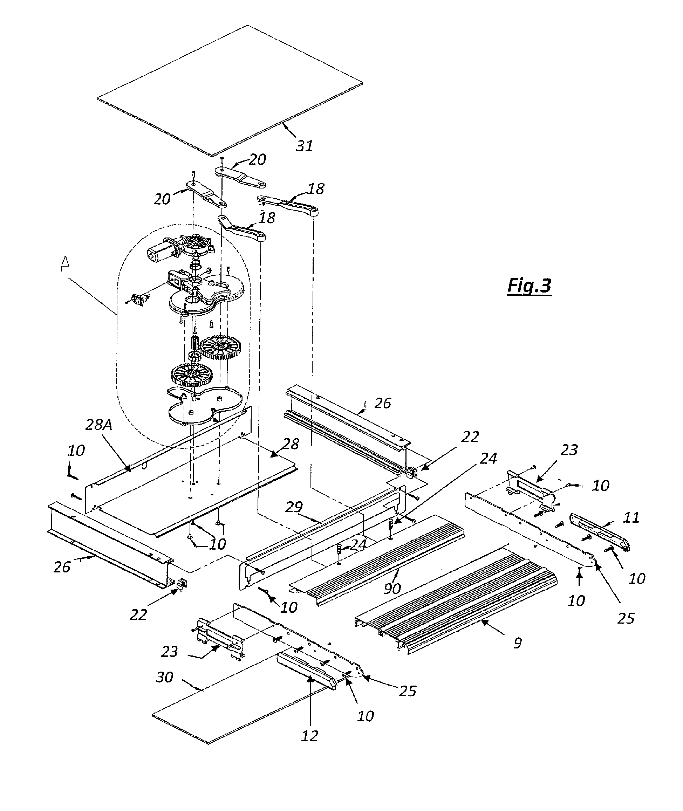

On the distal portion of each side plate 25 is applied a cover plate (11 and 12, respectively to the right and to the left in Fig.3). The proximal part of each side plate 25 is fixed to a sliding pad 23, that can be made of plastic material.

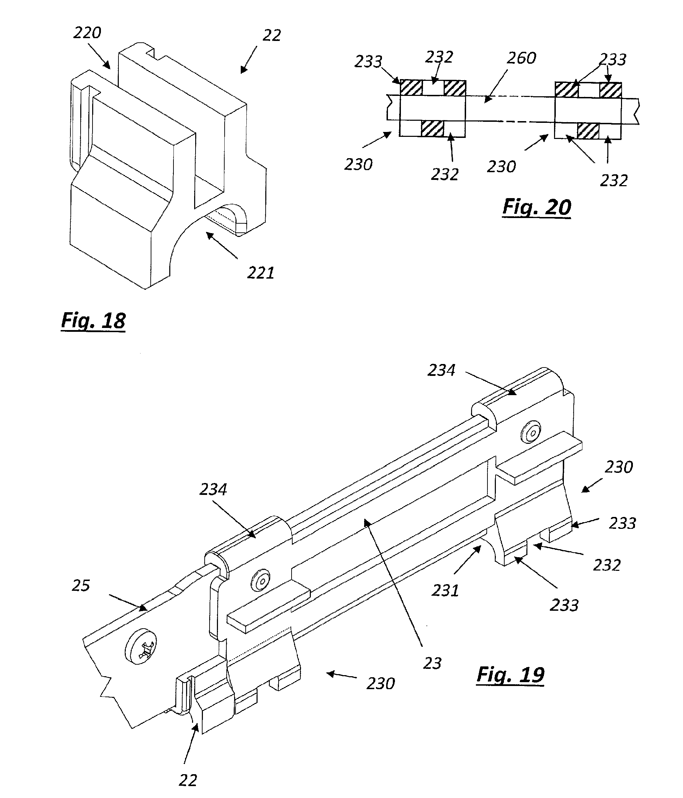

The sliding pad 23 is provided with sliding portions destined to be in contact with corresponding portions of the flanks 26 of the container body, as described below. On its top part, the sliding pad 23 is provided with two appendixes 234 that have a convex shape on the the top side, this side being destined to slide in a corresponding seat 261 of the flank 26; inferiorly, the sliding pad 23 is provided with two appendixes 230, which are concave on the lower side 231, so as to define a concave seat that can be fitted on a corresponding convex portion 260 of the flank 26. Advantageously, in addition, the lower extension 230 of the sliding pad 23 has a discontinuity on its lower side, thus defining a tooth 233 with two open parts 232 at both its sides to eliminate or at least drastically reduce the possible accumulation of dirt and/or debris in the sliding area. In other words, the body defined by the portion 260 of the flank 26 is not completely covered, but said portion is only partially covered, so as to form a discharge route through which dirt can exit without accumulating. In the schematic view of Fig. 20 it is possible to note that along the longitudinal direction of the lower appendix 230, that is, along a direction corresponding to the sliding direction, the teeth 233 are arranged offset on the opposite sides of the body 260. In this way, it is ensured the guide of the sliding pad 23 when it slides along the body 260, but the opposite sides of the same body 260 are not completely covered by said appendix 230.

Therefore, each of the side plates 25 of the tread 9, provided with the respective pad 23, can slide along the direction of movement of the step along the guides defined by the flanks 26 of the container body 3. In practice, inside the profiles that constitute the flanks 26 of the body 3, there is a seat for the sliding pads 23 that (as particularly shown in Fig. 20) inferiorly are fitted on the complementary shaped projection 260 and, on the upper side, are inserted in the seat 261 that is complementary shaped with respect to appendix 234 of the sliding pad 23.

At the distal (or front) part of the sides 26 of the container body 3 it is fixed the support element 22. The support element 22 has a lower groove 221 which is destined to be coupled with the protrusion 260 of the sidewalls 26 and is superiorly provided with an open channel 220, intended to receive the lower edge of the corresponding flank 25 of the tread 9, 90. In this way, the tread 9, 90 can slide with respect to the container body 3 because the same tread is provided with the side plates 25 that slide in the corresponding flanks 26 thanks to the presence of the sliding pads 23 and the support elements 22.

In the proximal or internal part of the tread 9, 90 there are two holes intended to receive corresponding locking snap pins 24. The pin 24 is formed by a body (realizable in plastic material) substantially cylindrical provided with an end 240 in which there is a hook which temporarily and elastically reduces its overall dimensions when it is introduced in a hole dimensioned to receive it.

Each of the pins 24 is intended to pass through a corresponding hole 180 presented at a first end by a connecting rod 18, forming a link between the connecting rod 18 and the tread, allowing the rotation of the same connecting rod 18 about the axis defined by the pin 24. At the opposite end, the connecting rod 18 is provided with a coupling element 181, constituted by a cylindrical body projecting axially from the connecting rod and having a radial appendix 182. The outer face of the coupling element 181 is therefore represented by a circular shape provided with a radial tooth 182. The shape of the connecting rods 18 is substantially rectilinear, with a bent part, according to the angle indicated by α in the drawings, at the ends which support the coupling elements 181. In particular, these ends are turned towards the inside when the two connecting rods are assembled; in practice, when the connecting rods 18 are mounted, the respective bent parts are directed towards each other.

The coupling element 181 is intended to pass through a corresponding slotted housing 200 provided at a first end of a lever or crank 20. The crank 20 is provided, at the opposite end, with a through-hole 201. On one face of the crank 20, in correspondence of the hole 201, there is provided a grooved seat 202 shaped complementary with a toothed wheel as further described in the following.

In practice, the two cranks 20 are pivoted to the connecting rods 18, so as to be rotatable with respect to the latter, being able to rotate about the axis defined by the coupling element 181. In addition, one of the two cranks 20 is provided with a tooth 203 adapted to interfere with a limit switch 5 as described below.

The step 1 further comprises a casing formed by two half-shells 13 and 17, which are joined yop each other to form a closed container.

The presence of the casing determines a considerable advantage for the protection of the system for moving the step against dirt and moisture; furthermore, it is very useful during the assembly operations because it makes it possible to realize the retractable step complete of all components of the moving system in its interior, without the risk that one or more components disengage during transport and mounting of the step on the vehicle. In addition, once the moving system is realized, completed with the casing, the same system can be applied to the step in a single operation.

The lower half-shell 13 is provided with three cylindrical supports 130, 131, 132 that protrude toward the inside of the casing (i.e. upwardly with respect to the half-shell). Two toothed wheels 14 are rotatably fitted on the cylindrical supports 130 and 131 , said wheels being identical to each other and having a first toothing 140 which extends over the entire contour of the wheel, and a second set of teeth 141, of smaller diameter than the first, arranged on a different plane (an upper plane in the drawings) and so shaped as to be complementary to the groove 202 of the crank 20 which, therefore, can be easily connected to the same toothed wheel.

On the cylindrical support 132 it is rotatably fitted a pinion 15, provided with an internal toothing and an external toothing. The internal toothing of the pinion 15 is shaped in a complementary manner in respect to the toothing of a grooved motor shaft 16 driven in rotation by a motor 35. The external toothing is suitable to mesh with the external teeth 140 of one of the wheels 14.

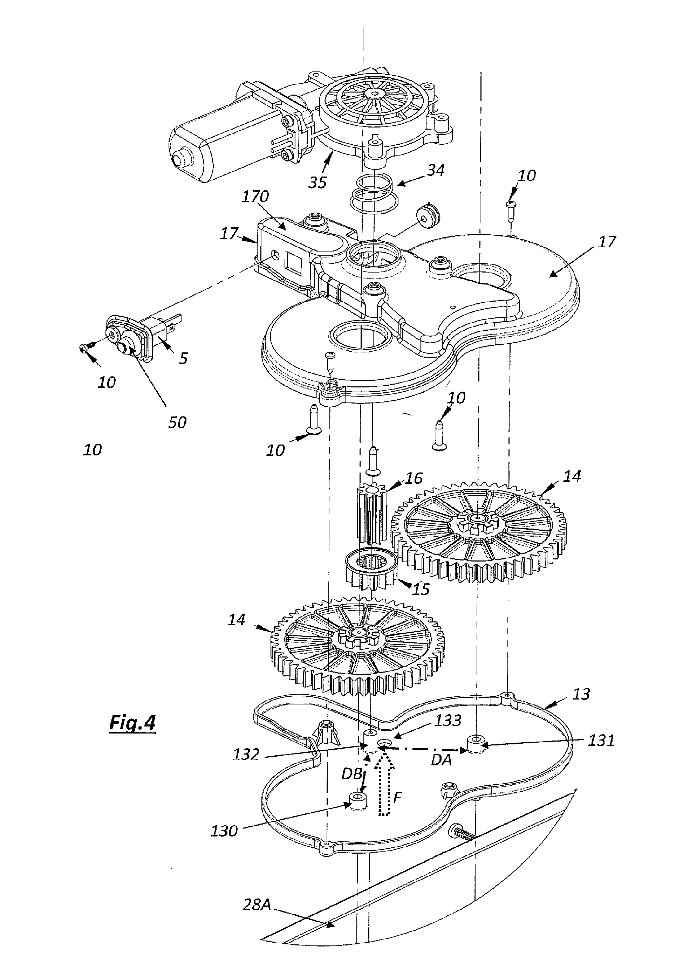

The supports 130, 131, 132 are arranged such that the two wheels 14 mesh with each other and the pinion 15 engages only one of the two wheels. Referring to the drawings, in particular to Fig.4, the distance DB between the support 130 and the support 132 will be greater than the value of the distance DA between the support 131 and the support 132, so that the wheel 14 disposed on the right is engaged by the pinion 13 and transmits the motion to the wheel 14 arranged on the left. In this way, a rotation of the pinion 15 corresponds to opposite rotations of the two toothed wheels 14; for instance, again with reference to the position of Figure 4, the clockwise rotation of the pinion 15 corresponds to a counterclockwise rotation of the right wheel 14 meshed directly to it and a clockwise rotation of the left wheel 14 which is meshed with the wheel positioned on the right.

The upper half-shell 17 is provided with a through hole for the passage of the motor shaft 16 and with two through holes, through which pass the second sets of teeth 141 of the toothed wheels 14. The grooved shaft 16 is driven by the motor 35 which is provided with a housing coverage so as to cover the relative hole. In correspondence with the holes provided for the central parts 141 of the wheels 14 are arranged the ends of the cranks 20 which rotate as the same wheels because the teeth 141 are stably inserted in the grooved seats 202.

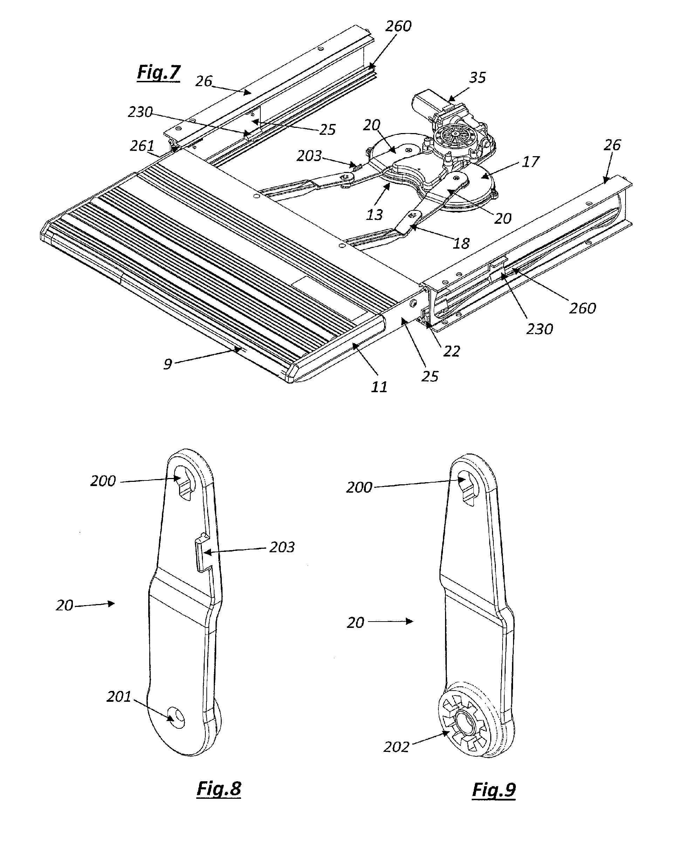

The upper half-shell 17 has a rear cavity 170 intended to accommodate a micro-switch 5 adapted to detect the positioning of the retractable step by controlling the end-stroke position of the crank 203 mentioned above. In practice, when the step is in the rest position, i.e. when the tread 9, 90 is located inside the containment body 3, each crank 20 is located in a position substantially parallel to the direction of displacement of the tread. In this way, the rotation of one of the cranks 20 (the one arranged on the left in Figure 7) brings the tooth 203 to interfere with the movable element 50 of the micro-switch 5. The switch 5 is within the protection cover to avoid bad contacts and/or malfunction.

The step is also provided with release means that allow to bring the step in the retracted position in case of malfunctions. As can be seen from the drawings, a spring 34 pushes down the motor shaft 16 so as to stabilise the connection motor 35 - drive shaft 16 - pinion 15 - gear wheels 14. The lower half-shell is provided with a hole 133, which can be kept closed by an easily removable cap (not shown); through the hole 133 it is possible to access to the pinion 15, making it slide axially with respect to the motor shaft 16 and thus decoupling the motor from the gear wheels 14. This operation can be executed, for example, using a screw or other suitable tool to move upwards (see the direction of the arrow F) the pinion 15, thus disengaging it from the wheel 14 to which it is normally engaged. Once the toothed wheels 14 are disconnected from the motor, it is possible to move the step also manually to bring it back into the rest or closed position. When the step is closed, it is possible to reconnect the toothed wheels to the motor to lock the step.

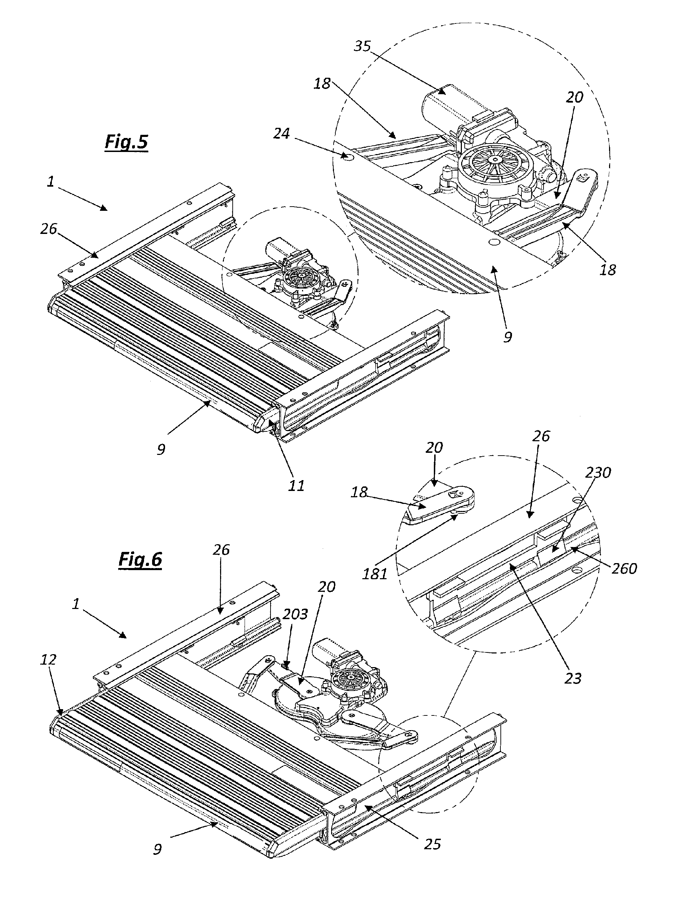

In Figs. 5-7 are shown some configurations of the step 1 of the invention during the opening or the extraction of the tread 9 from the container body 3. In these figures the upper cover 31 is not represented to show the inside of the device.

Fig. 5 shows the closed position, that is, the retracted configuration. In this configuration, the tread 9, 90 is completely retracted inside the body 3; the cranks 20 and the connecting rods 18 are in the position of maximum retraction, i.e. each crank 20 is arranged substantially parallel to the direction of movement of the tread and the corresponding connecting rod 18 forms a small angle with it because of its slightly bent portion.

When the motor 35 is activated, the rotation of the toothed wheels 14 determines the corresponding rotation of the cranks 20 directly connected to them. The displacement of the tread 9, thanks to said angle between the connecting rods and cranks, requires a relatively limited power from the motor, thanks to the favorable gear ratio.

When the sliding step, passing through the intermediate position shown in Figure 6, completes its run, it arrives at the fully extended configuration. In this configuration, the cranks 20 have performed a rotation of about 180° bringing the connecting rods 18 in a position of maximum opening/ xtension that is advantageous for the subsequent operation of retraction of the step. In fact, thanks to the aforementioned bent portion of the connecting rods 18, the latter are not arranged on an ideal extension of the cranks but form with the latter an angle that facilitates the working of the motor in the phase of return to the initial position. Advantageously, some elements such as, for example, the toothed wheels 14, the pinion 15, the grooved shaft 16, the sliding pads 23, the support elements 22, as well as the connecting rods 18 and the cranks 20, can be made in plastic material of the so-called self-lubricating; for example, it can be used a resin reinforced with glass fiber. This eliminates the need to grease the geared or sliding areas; the absence of grease within the device prevents dirt and possible debris to adhere to the grease as instead occurs with greased components.

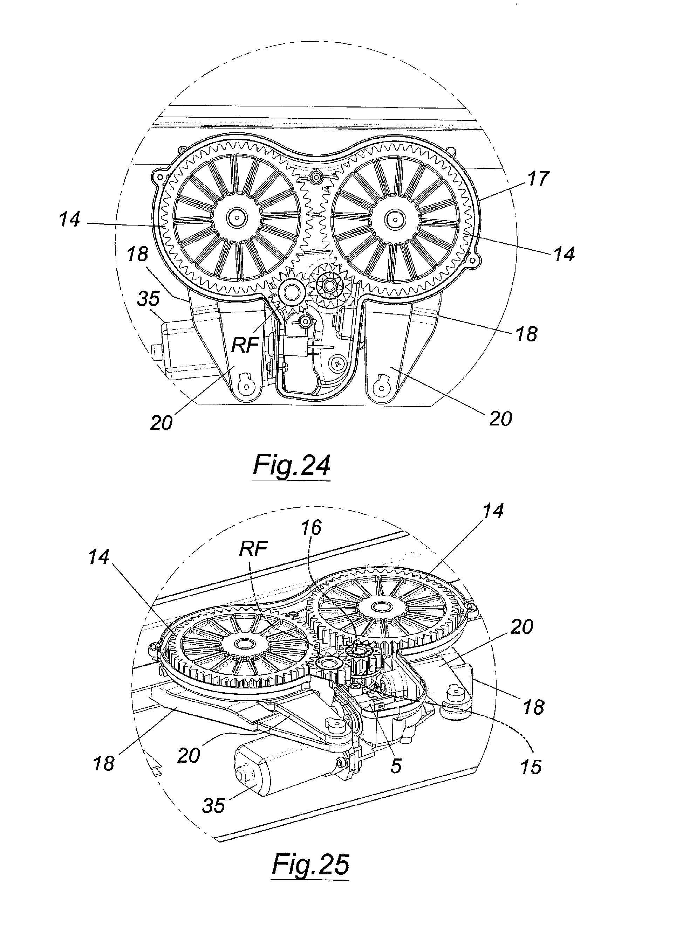

Figs.24 and 25 show another embodiment of the system described above, in which the toothed wheels 14 do not mesh with each other but the first toothed wheel 14 meshes with the pinion 15 as in the previous example, while the second toothed wheel 14 meshes with an idle sprocket RF interposed between the pinion 15 and the second toothed wheel 14. Such solution allows to space from each other the rotation axes of the toothed wheels 14 without having to increase their diameter and, thus, it is possible to move wider steps whilst ensuring the symmetry of the forces exerted on the tread. In addition, since in this case the toothed wheels 14 do not mesh with each other directly, when the connection of the same gear wheels with the motor shaft 16 is interrupted as mentioned before, it is possible to move the step in the retracted configuration also if it is manually pushed asymmetrically.

Naturally, the invention is not limited to what has beend described and illustrated, but may be greatly varied as regards the nature and arrangement of the materials used, without departure from the inventive teaching set forth above and hereinafter claimed.

## Claims

1. Retractable step comprising a tread (9, 90) which slides bi-directionally along a guide (26) with corresponding sliding means, the tread (9, 90) being driven by motor means comprising an electric motor (35) to which it is connected by means of a mechanical transmission (14, 15, 16), so as to be disposed in a first retracted configuration in which the tread is in a corresponding housing body (3) and in a second extracted configuration in which the tread protrudes from said housing body, the guide (26) being arranged on two sides of said housing body (3), **characterized in that** said sliding means comprise a body (260) provided by said guide (26) and having a profile that is complementary coupable with a sliding pad (23) integral with the tread (9, 90), the contact between said body (260) and the sliding pad (23) occurring on a discontinuous contact surface, said contact surface having a predetermined number of discontinuities through which possible accumulations of dirt formed between the same sliding pad (23) and the body (260) can flow out.

2. Step according to claim 1, **characterized in that** said discontinuities are provided on the sliding pad (23).

3. Step according to claim 2, **characterized in that** said sliding pad (23) is provided with base portions or appendixes (230), whose lower face (231) is concave, defining a seat apt to be fitted on a corresponding convexity of said body (260), said appendixes (230) having a lower discontinuity that forms a series of teeth (233) arranged offset in respect to two opposite sides of the body (260).

4. Step according to one of the preceding claims, **characterized in that** it is provided with means for unlocking said transmission means (15, 16) adapted to release the connection with the said motor means.

5. Step according to claim 4, **characterized in that** said transmission means (15, 16) comprise a pinion (15) driven by a grooved shaft (16) which in turn is connected to the motor means (35) and gears (14) connected with the pinion (15), said unlocking means being adapted to disengage the pinion (15) from said gears (14).

6. Step according to claim 4, **characterized in that** said transmission means (15, 16) are at least partly contained within a casing (13, 17), said unlocking means acting through an access opening (133) provided by said casing (13, 17).

7. Step according to claim 5 and 6, **characterized in that** between said pinion (15) and said grooved shaft (16) acts a spring (34), said unlocking means acting so as to overcome the resistance provided by said spring (34).

8. Step according to one of the preceding claims, **characterized in that** said transmission means (15, 16) are at least partly contained within a casing (13, 17) which allows the protection of the parts contained in it and the association of the same parts to the step with one operation.

9. Step according to one of the preceding claims, **characterized in that** said transmission means comprise a gear train (16, 15, 14) connected upstream to the motor means (35) and downstream to a pair of doubled levers (18 , 20), one of said levers or connecting rod (18) being substantially arcuate, so that, when the step is in a position of end of stroke, or must be moved to return to the previous configuration, the same connecting rod (18) is disposed on a line not coinciding with that of the other corresponding lever or crank (20), thus determining an advantageous power request given the angle between the two levers (18, 20).

10. Step according to one of the preceding claims, **characterized in that** said transmission means, as well as said sliding pad (23), are made of plastic material with a low coefficient of friction, of the self-lubricating type.

11. Step according to one of the preceding claims, **characterized in that** said motor means (35) are provided with a limit sensor (5) contained at least partially in a protective casing (13, 17) and acting on said transmission means (20).

12. Step according to one of the preceding claims, **characterized in that** it is mounted on a camper van or similar vehicle.
